# EUROPEAN PATENT SPECIFICATION

(11) **EP 3 779 179 B1**
(45) Date of publication and mention of the grant of the patent: **30.10.2024**
(21) Application number: 20189963.0
(22) Date of filing: 07.08.2020
(51) Int. Cl.: F03B 17/02

(54) **ENERGY CONVERSION SYSTEM**
ENERGIEUMWANDLUNGSSYSTEM
SYSTÈME DE CONVERSION D'ÉNERGIE

(30) Priority: 14.08.2019 IT 201900014793
(43) Date of publication of application: 17.02.2021
(73) Proprietor: Biscalchin, Leonardo, 9470 Buchs St. Gallen (CH)
(72) Inventor: Biscalchin, Leonardo, 9470 Buchs St. Gallen (CH)
(74) Representative: Fabiano, Piero

(56) References cited:
- EP-A1- 2 418 375
- DE-A1- 10 109 870
- US-A1- 2008 246 283
- US-A1- 2012 207 588

## Description

Object of the present invention is an energy conversion system.

In particular, object of the present invention is an energy conversion system that exploits the force of gravity and a basin of water, whether natural or artificial, for activating electric generators.

Nowadays, the available amounts of natural energy resources such as gas, coal or oil worldwide tend to decrease abruptly without being able to regenerate as quickly. Thus, in the future, generating electric power by exploiting the so-named renewable resources, such as water, the sun and wind, will become more and more necessary for human activities.

In the state of the art, there are many systems for generating electric power by means of the natural energy resources specified above, as for example the system shown in the document US 2008/246283 A1.

The systems for generating electric power of the known type suffer from some limitations, in fact, the systems that provide for the use of non-renewable energy sources for generating electric power (i.e. that are in continuous depletion or that are not anyhow immediately available for the energy needs of human activities on earth) involve the production of carbon dioxide and carbon monoxide which affect the molecular balance of the earth's atmosphere with well-known climatic consequences.

The systems for generating electric power which instead use renewable sources such as solar energy, wind energy or water energy suffer from limitations due to the cyclic availability of the aforesaid forms of energy, thus the revolution of the earth as far as the solar energy is concerned, the meteorological changes for wind energy and the availability of adequate water resources for water energy. Such alternative energy forms are thus not the definite solution to fossil energy forms. This is a heavy limitation that is well known since the electric power produced from renewable sources worldwide is much lower in percentage than that still generated from fossil or nuclear energy sources.

The finding of the present invention overcomes the limitations specified above.

The present invention concerns an energy conversion system whose operating process does not provide for the release of any harmful emission into the atmosphere to protect the environment, it is possible to produce electricity by using the gravitational potential energy contained in water by balancing forces and pressures for a limited and predetermined time period.

In particular, the present invention concerns an energy conversion system comprising at least one first generating element in turn comprising an accumulation tank for accumulating a fluid and a first axial turbine and a first electric generator operatively connected to the aforesaid axial turbine for generating electric power.

The system of the present invention further comprises a second generating element in turn comprising a second accumulation tank for accumulating a fluid, a second axial turbine and a second electric generator operatively combined with the second axial turbine for generating electric power.

The conversion system comprises a transforming element for transforming the energy generated by the first electric generator and/or by the second electric generator so as to be able to send it to a predetermined electric network.

In particular, the first tank and the second tank are configured to be alternatively immersible in the fluid to temporarily store a predetermined volume by means of respective passage mouths arranged in a lower portion of the respective first and second tanks.

More in detail, the first accumulation tank and the second accumulation tank have, respectively at the first and second passage mouths, the first and the second turbines so that the passage of fluid determines the operation of the first axial turbine or the second axial turbine or of two turbines contemporaneously.

In particular, in a step of immersing the first tank in the fluid, it is filled by gravity with the same fluid passing through the first mouth so as to operate the first turbine and the first generator. Contemporaneously, in a step of surfacing the second tank from the fluid, the same fluid previously stored is emptied by gravity by passing through the second mouth so as to operate the second turbine and the second generator.

During the cyclic surfacing/immersing of the first tank and the second tank, the conversion system of the present invention determines a conversion of potential energy into useful energy whose value is proportional to a total volume of the fluid flowing into and out of the first tank and into and out of the second tank and to a depth "H" reached by the first tank and the second tank with respect to a free surface of the fluid.

More in detail, the conversion system comprises a movement unit for moving a further fluid, which preferably has an aggregation state different from the aforementioned fluid.

The movement unit is configured to displace the further fluid in and out of the first accumulation tank and in and out of the second accumulation tank in an operative condition of operation of the conversion system of the present invention.

The movement unit is configured to pump the further fluid, thus generating a predetermined pressure inside the first and second tanks in a surfacing step thereof, and to suction the further fluid, thus generating a predetermined depression inside the first and second tanks in an immersing step.

The conversion system of the present invention further comprises an activation unit configured to provide electric power at least to the movement unit adapted to allow an initial step of pumping and suctioning the further fluid towards and from the first tank and towards and from the second tank. Such electric power cannot be provided by the conversion system itself but will be drawn from other external sources, such as for example the public electric network or other source such as a battery pack functionally connected to the activation unit.

The activation unit is further configured to provide electric power at least to the movement unit adapted to allow a pumping and suctioning step of the further fluid towards and from the first tank and towards and from the second tank.

In other words, to allow the first tank to be immersed and to the second tank to surface, or vice-versa, the movement unit is provided and works to pump the second fluid out of the first tank, thus creating a depression therein which helps the sinking of the first tank.

The movement unit sends the second fluid into the second tank, thus helping its emptying from the first fluid and consequently its surfacing.

The process is repeated inversely to allow the sinking of the second tank and the surfacing of the first tank.

In this working step, the activation unit is configured to provide electric power to the movement unit. The electric power can thus be withdrawn from an electric network, such as the public one, conveniently connected to the activation unit, or to another source such as a battery pack functionally connected to the movement unit.

Preferably, the aforementioned fluid is a non-compressible fluid and the further fluid is a compressible fluid, in particular the further fluid not being mixable with the fluid mentioned earlier. Even more preferably, the first fluid mentioned is water, while the further fluid is air.

In an operative configuration of operation of the conversion system of the present invention, the first tank and the second tank are configured to contain the fluid and the further fluid contemporaneously.

In particular, the first tank and the second tank are fluidically connected to the movement unit separately by means of ducts, but are not fluidically connected to each other.

Preferably, the aforementioned connecting ducts are of the flexible and sealed type.

The first turbine is contained in a volume "V1" defined by the first tank and arranged vertically at the first mouth. The second turbine is contained in a volume "V2" defined by the second tank and arranged vertically at the second mouth.

In more detail, the first turbine has a plurality of blades arranged on a respective impeller which are configured to be rotatable by at least 180 degrees around an axis thereof and the second turbine has a plurality of blades arranged on a respective impeller which are configured to be rotatable6 by at least 180 degrees around an axis thereof. Preferably, the blades of the first turbine and of the second turbine are rotatable independently.

More in detail, the first tank comprises a first adjustable vane stator arranged at the first mouth and configured to interact with the first turbine by means of the passage of the fluid.

Similarly, the second tank comprises a second adjustable vane stator arranged at the second mouth and configured to interact with the second turbine by means of the passage of the fluid.

In particular, in an immersing step of the first tank in the fluid, the vanes of the turbine and the vanes of the stator are oriented so as to fluid-dynamically interact in order to achieve the maximum operating efficiency of the first turbine and the generator. Vice-versa, in a surfacing step of the first tank from the fluid, the vanes of the turbine are arranged rotated by 180 degrees and the vanes of the stator are oriented in the opposite direction so as to fluid-dynamically interact in order to achieve the maximum operating efficiency of the first turbine and the respective generator.

Similarly, in an immersing step of the second tank in the fluid, the vanes of the second turbine and the vanes of the stator are oriented so as to fluid-dynamically interact in order to achieve the maximum operating efficiency of the second turbine and the respective generator. In a surfacing step of the second tank from the fluid, the vanes of the second turbine are arranged rotated by 180 degrees and the vanes of the stator are oriented in the opposite direction so as to fluid-dynamically interact in order to achieve the maximum operating efficiency of the second turbine and the respective generator.

According to an inventive concept of the present invention, the first tank and the second tank are mechanically separated and independent of each other in the surfacing step and in the immersing step, thus operable independently one of the other.

The detailed description of the present invention is provided with reference to the accompanying figures 1-2, which also have a purely exemplary and thus non-limiting purpose, in which:
- figure 1 is a schematic front view of the conversion system of the present invention;
- figure 2 is a schematic sectional view of a particular of figure 1 with some hidden parts to better highlight others.

In particular, the conversion system denoted by the numerical reference 1 and its operation are described in detail hereunder.

The conversion system 1 of the present invention constitutes a preferably floating electric power station formed by two spherical tanks which, depending on their reciprocating movement of immersing into and surfacing from a fluid, give rise to the movement of the respective means for generating electric power.

The present invention concerns an energy conversion system 1 comprising at least one first generating element 10 in turn comprising an accumulation tank 11 for accumulating a fluid 100 and a first axial turbine 12 and a first electric generator 13 operatively connected to the aforesaid axial turbine 12 for generating electric power.

The system 1 of the present invention further comprises at least one second generating element 20 in turn comprising a second accumulation tank 21 for accumulating a fluid 100, a second axial turbine 22 and a second electric generator 23 operatively combined with the second axial turbine 22 for generating electric power.

Preferably, according to the inventive concept of the present invention, the generating elements 10, 20 can be more than two and are even more preferably multiples of two.

Preferably, to ensure a dynamic balance during the operation of the system 1, the tanks 10, 20 have the same inner volume, respectively V1 and V2.

The conversion system 1 comprises a transforming element 30 for transforming the energy generated by the first electric generator 13 and/or by the second electric generator 23 so as to be able to send it to a predetermined electric network not shown in the attached figures.

In particular, the first tank 10 and the second tank 20 are configured to be alternatively immersible in the fluid 100 to temporarily store a predetermined volume by means of respective passage mouths 14, 24 arranged in a lower portion of the respective first tank 10 and second tank 20.

More in detail, the first accumulation tank 10 and the second accumulation tank 20 have, respectively at the first passage mouth 14 and the second passage mouth 24, the first turbine 12 and the second turbine 22 so that the passage of fluid 100 determines the operation of the first axial turbine 12 or of the second axial turbine 22 or of both turbines 12, 22 contemporaneously.

In fact, the continuous and cyclical passage of the fluid 100 from the outside to the inside of the two tanks 10, 20 through the passage mouths 14, 24 determines the operation of the turbines 12, 22 and thus the operation of the electric generators 13, 23.

In particular, in a step of immersing the first tank 10 in the fluid 100, it is filled by gravity with the same fluid 100 passing through the first passage mouth 14 so as to operate the first turbine 12 and the first generator 13 mechanically connected thereto. Contemporaneously, in a step of surfacing the second tank 20 from the fluid 100, the same fluid 100 previously stored is emptied by gravity by passing through the second passage mouth 24 so as to operate the second turbine 22 and the second generator 23 mechanically connected thereto.

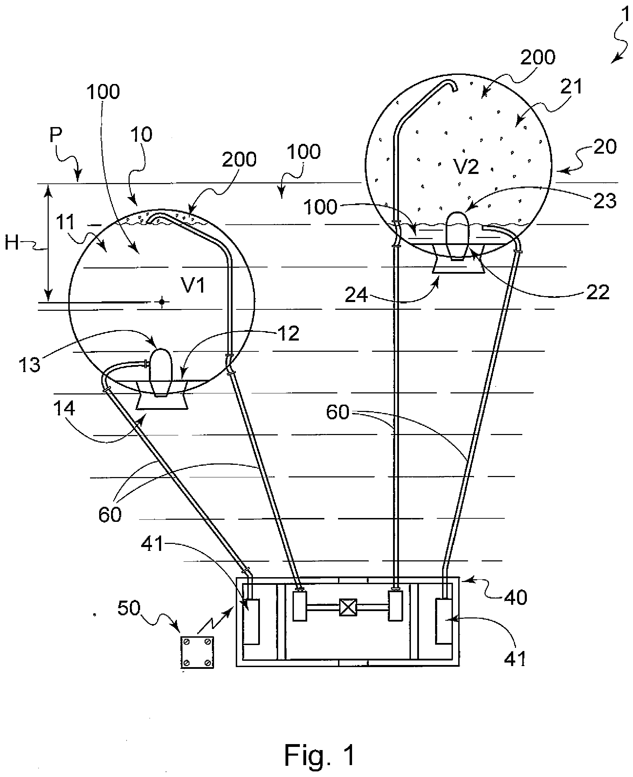

During the cyclic surfacing/immersing of the first tank 10 and the second tank 20, the conversion system 1 of the present invention determines a conversion of potential energy into useful energy whose value is proportional to a total volume of the fluid flowing into and out of the first tank 10 and into and out of the second tank 20 and to a depth H reached by the first tank 10 and the second tank 20 with respect to a free surface P of the fluid 100, as shown by way of example in the attached figure 1 only for the first tank 10.

More in detail, the conversion system 1 comprises a movement unit 40 for moving a further fluid 200. Preferably, the further fluid 200 has an aggregation state different from the fluid 100 mentioned hereinbefore. In particular, the further fluid is at the gaseous state, the fluid 100 is at the liquid state. Preferably, the aforementioned fluid 100 is a non-compressible fluid and the further fluid 200 is a compressible fluid, in particular the further fluid 200 not being mixable with the fluid 100 mentioned earlier. Even more preferably, the first fluid 100 mentioned is water, while the further fluid 200 is atmospheric air.

The movement unit 40 is configured to displace the further fluid 200 in and out of the first accumulation tank 10 and in and out of the second accumulation tank 20 in an operative condition of operation of the conversion system 1 of the present invention. Preferably, the movement unit 40 comprises an electric part 41 for transforming and/or processing the electric power generated by the generators 13, 23. Advantageously, after the start-up step of the conversion system 1, the movement unit 40 is able to operate by keeping itself by means of a percentage of the electric and/or mechanic power produced by the cyclic movement of the two tanks 10, 20 and/or by the operation of the respective generators 13, 23.

In particular, the movement unit 40 is configured to pump the further fluid 200, thus generating a predetermined pressure inside the first tank 10 and the second tank 20 in a surfacing step thereof, and to suction the further fluid 200, thus generating a predetermined depression inside the first tank 10 and second tank 20 in an immersing step thereof.

The conversion system 1 of the present invention further comprises an activation unit 50 configured to provide electric power at least to the movement unit 1 adapted to allow an initial pumping and suctioning step of the further fluid 200 towards and from the first tank 10 and towards and from the second tank 20.

Such electric power, i.e. the one adapted to allow an initial pumping and suctioning step, cannot be provided by the conversion system itself but will be drawn from other external sources, such as for example the public electric network or other source such as a battery pack functionally connected to the activation unit.

In an operative configuration of operation of the conversion system 1 of the present invention, the first tank 10 and the second tank 20 are configured to contain the fluid 100 and the further fluid 200 contemporaneously, i.e. water and air contemporaneously.

In particular, the first tank 10 and the second tank 20 are fluidically connected to the movement unit 40 separately by means of ducts 60. Preferably, the first tank 10 and the second tank 20 are fluidically connected to each other. Even more preferably, the aforementioned ducts 60 are configured to also allow a connection of electric type between the electric generators 13, 23 and the movement means 40 and/or activation unit 50 and/or civil electric network.

Preferably, the aforementioned connection ducts 60 are of the flexible and sealing type to prevent dispersions of the fluids 100, 200 or infiltrations in the event of a connection of the electric type.

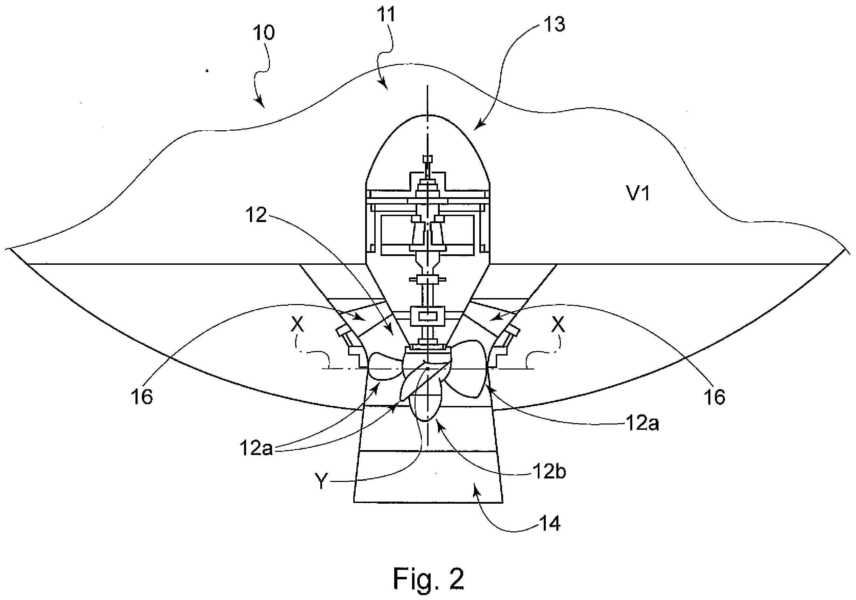

With reference to the attached figure 2, by way of example and without limitations, the first axial turbine 12 is contained in a volume V1 defined by the first tank 10 and arranged vertically at the first passage mouth 14. The second turbine 22 is contained in a volume V2 defined by the second tank 20 and arranged vertically at the second passage mouth 24 not shown in the attached figure 2.

In more detail, preferably, the first turbine 12 has a plurality of blades 12a arranged on a respective impeller 12b which are configured to be rotatable by at least 180 degrees around their rotation axis X. Preferably, the second turbine 20 has a plurality of blades 22a arranged on a respective impeller 22b which are configured to be rotatable by at least 180 degrees around their rotation axis Y. Preferably, the blades 12a of the first turbine 12 and the blades 22a of the second turbine 22 are rotatable independently.

In more detail, the first tank 10 comprises a first adjustable vane stator 16 arranged at the first mouth 14 and configured to interact with the first turbine 12 by means of the passage of the fluid 100.

Similarly, the second tank 20 comprises a second adjustable vane stator 26 arranged at the second passage mouth 24 and configured to interact with the second turbine 22 by means of the passage of the fluid 100 (not shown in the attached figure 2).

In particular, in an immersing step of the first tank 10 in the fluid 100, the vanes 12a of the first turbine 12 and the vanes of the stator 16 are oriented so as to fluid-dynamically interact in order to achieve the maximum operating efficiency of the first turbine 12 and the electric generator 13. Vice-versa, in a surfacing step of the first tank 10 from the fluid 100, the vanes 12a of the first turbine 12 are arranged rotated by 180 degrees and the vanes of the stator 16 are oriented in the opposite direction so as to fluid-dynamically interact in order to achieve the maximum operating efficiency of the first turbine 12 and the respective electric generator 13. These two operative configurations of operation of the conversion system 1 are not shown in detail in the attached figures.

Similarly, in an immersing step of the second tank 20 in the fluid 100, the vanes 22a of the second turbine 22 and the vanes of the second stator 26 are oriented so as to fluid-dynamically interact in order to achieve the maximum operating efficiency of the second turbine 22 and the respective electric generator 23. In a surfacing step of the second tank 20 from the fluid 100, the vanes 22a of the second turbine 22 are arranged rotated by 180 degrees and the vanes of the second stator 26 are oriented in the opposite direction so as to fluid-dynamically interact in order to achieve the maximum operating efficiency of the second turbine 22 and the respective electric generator 23.

During the operation, the movement unit 40 pumps the second fluid, preferably air, by generating a predetermined pressure inside the first tank 10 and the second tank 20 in a surfacing step thereof and to suction the second fluid, preferably air, thus generating a predetermined depression inside the first and second tanks in an immersing step.

In order to pump air by generating a predetermined pressure inside the first tank 10 and the second tank 20 in a surfacing step thereof, as to suction air by generating a depression, the movement unit 40 can make use of the electric power generated by the conversion system 1 itself and accumulated for example in a battery pack, and/or of the electric power coming from the activation unit 50 and consequently from the civil electric network.

The consumption of electric power to allow the surfacing of a first tank 10 or second tank 20 is less than that generated by the conversion system 1, through the first 12 or the second turbine 22 which exploit the sinking potential energy of the remaining tank, respectively the first one 10 or second one 20.

During the operation, the movement unit 40 pumps pressurized air into a tank, for example the first tank 10. Preferably, the movement unit 40 pumps pressurized air into a tank, in its upper part, by gradually making the water contained therein come out, by making one of the two turbines work and consequently one of the two generators. In the event of the first tank 10, the movement unit 40 pumps air, thus making it surface and emptying it from water. The water coming out of the first turbine 12 and the first generator 13 generate electric power.

Contextually, the other tank, in the example the second tank, is sinking due to the depression generated therein always by the movement unit 40, which causes the indraught of water into the second tank 20 by generating an inner depression, the water coming in through the second turbine 22 and the second generator 23 generates electric current.

When the first tank 10 has reached the end of its sinking cycle and all the water originally contained inside the tank has come out of the first turbine 12 that generated current through the first generator 13 a pause occurs, preferably of seven seconds.

The rotation of the blades 12a of the turbine and vanes of the first stator 16 occurs during this pause or time lapse. Successively, the rising step of the first tank 10, which occurs with the help of the movement unit 40 which suctions, in this case, the air from the inside of the first tank 10 so as to create a depression and favor the inflow of the water always through the first turbine 12 which generates current with the first generator 13, can thus occur until the rising cycle has been completed.

While the tank surfaces, the remaining one immerses and vice-versa.

According to an inventive concept of the present invention, in an embodiment not shown of the present invention, the first tank 10 and the second tank 20 are mechanically separated and independent of each other in the surfacing step and in the immersing step, thus operable independently one of the other.

Preferably, the tanks 10 and 20 are spherical in shape. Even more preferably, at least the tanks 10, 20 of the conversion system 1 are made of metal.

By way of example and without limitations, an example of energy and mechanical dimensioning of the conversion system 1 of the present invention is reported hereunder:
For a tank 10, 20 of 5000 m³ in volume, it is possible to have 4082 effective m³ within which 2.2 m³ of fluid 100 per second are moved. The entire volume is thus moved in 1886 seconds for each tank 10, 20, i.e. in 62.20 minutes, i.e. the duration of a complete immersing and surfacing cycle of a single tank 10, 20. In a year, a work of 8760 hours is estimated for each tank 10, 20, which means 8450 cycles for each tank, which implies an electric productivity of about 26.280.000 KWh for each tank 10, 20.

The present invention has reached the preset objects.

Advantageously, the conversion system can be installed in large hydroelectric basins, thus saving most of the water they consume to produce electric power, especially during periods of water shortage. Advantageously, the conversion system of the present invention can operate in basins with zero water and air consumptions under any environmental and climatic condition.

Advantageously, the conversion system is autonomous and operates cyclically for a given number of predetermined hours following the initial triggering by a power source, such as an activation unit as described in detail above, by drawing a predetermined percentage for sustenance from the energy produced. Advantageously, the conversion system of the present invention can be installed in all pools of water, such as lakes, seas, naval ports and in all parts of the planet with enough water for the volume of the tank of the conversion system.

Advantageously, the conversion system of the present invention has a simple and easy to access and control structure, maintenance is reduced to a minimum with very long overhaul intervals. Advantageously, in the event of a complete overhaul, the system of the present invention can be easily towed out of the water basin and overhauled in any construction site or equipped area.

Advantageously, the conversion system of the present invention is a controllable system whose generator's power can vary from the management of the stator and impeller in combination with the pressure and depression produced by the movement system.

Advantageously, the conversion system operating with an alternated cyclic pattern allows to produce electric power without any interruption or variation of the power generated for the predetermined operating time.

## Claims

1. Energy conversion system (1) comprising:
- at least one first generating element (10) comprising an accumulation tank (11) for accumulating a fluid (100) and a first axial turbine (12) and a first electric generator (13) operatively connected to said first axial turbine (12);
- a second generating element (20) comprising a second accumulation tank (21) for accumulating said fluid (100), a second axial turbine (22) and a second electric generator (23) operatively combined with said second axial turbine (22);
- a transforming element (30) for transforming the energy generated by said first electric generator (13) and said second electric generator (23);
wherein said first tank (11) and said second tank (21) are configured to be alternatively immersible in said fluid (100) to temporarily store a predetermined volume by means of respective passage mouths (14, 24) arranged in a lower portion of said first and second tanks (11, 21);
wherein said first accumulation tank (11) and said second accumulation tank (21) have, respectively at said first passage mouth (14) and said second passage mouth (24), said first turbine (12) and said second turbine (22) so that the passage of said fluid (100) causes the operation of said first axial turbine (12) or said second turbine (22) or both contemporaneously;
wherein, in the step of immersing said first tank (11) in the fluid (100), it is filled by gravity with the same fluid (100) passing through a first mouth (14) so as to operate said first turbine (11) and said first generator (13), contemporaneously, in a surfacing step of said second tank (21) from said fluid (100), the same fluid (100) previously stored is emptied by gravity by passing through a second mouth (24) so as to operate said second turbine (21) and said second generator (23);
wherein, during the cyclic surfacing/immersing of said first tank (11) and said second tank (21), the system (1) determines a conversion of potential energy into useful energy whose value is proportional to a total volume of said fluid (100) flowing into and out of said first tank (11) and into and out of said second tank (21) and to a depth (H) reached by said first tank (11) and said second tank (21) with respect to a free surface (110) of said fluid (100); wherein the system (1) comprises a movement unit (40) for moving a further fluid (200) having an aggregation state different from said fluid (100) wherein said movement unit (40) is configured to displace said further fluid (200) in and out of said first accumulation tank (11) and in and out of said second accumulation tank (21) when said fluid (100) is directed in and out of said first tank (11) and said second tank (21);
and said energy conversion system (1) further comprises an activation unit (50) configured to provide electric power at least to said movement unit (40) adapted to allow at least an initial step of pumping and suctioning said further fluid (200) towards and from said first tank (11) and towards and from said second tank (21) in an operative start-up configuration of said system (I); said activation unit (50) further providing electric power to said movement unit (40) adapted to allow at least one pumping and suctioning step of said further fluid (200) towards and from said first tank (11) and towards and from said second tank (21) in an operative configuration, wherein said electric power is drawn from an external source with respect to said system (1).

2. Conversion system (1) according to claim 1, wherein said movement unit (40) is configured to pump said further fluid (200), thus generating a predetermined pressure inside said first and second tank (11, 21) in a surfacing step thereof, and to suction said further fluid (200), thus generating a predetermined depression inside said first and second tanks (11, 21) in an immersing step.

3. Conversion system (1) according to claim 2, wherein said fluid (100) is a non-compressible fluid and said further fluid (200) is a compressible fluid, said further fluid (200) not being mixable with said fluid (100).

4. Conversion system (1) according to one or more of preceding claims 2-3, wherein said first tank and said second tank are configured to contain said fluid (100) and said further fluid (200) contemporaneously in an operative condition of said conversion system (1).

5. Conversion system (1) according to one or more of preceding claims 2-4, wherein said first tank (11) and said second tank (21) are fluidically connected by means of ducts (60) to said movement unit (40).

6. Conversion system (1) according to one or more of the preceding claims, wherein said first turbine (12) is contained in a volume (VI) defined by said first tank (11) and arranged vertically at said first mouth (14) and said second turbine (22) is contained in a volume (V2) defined by said second tank (21) and arranged vertically at said second mouth (24).

7. Conversion system (1) according to one or more of the preceding claims, wherein said first turbine (12) has a plurality of blades (12a) arranged on a respective impeller (12b) which are configured to be rotatable by at least 180 degrees around an axis thereof (X) and said second turbine (22) has a plurality of blades (22a) arranged on a respective impeller (22b) which are configured to be rotatable by at least 180 degrees around an axis thereof (Y).

8. Conversion system (1) according to one or more of the preceding claims, wherein said first tank (11) comprises a first adjustable vane stator (16) arranged at the first mouth (14) and configured to internet with said first turbine (11) and said second tank (21) comprises a second adjustable vane stator (26) arranged at the second mouth (24) and configured to internet with said second turbine (21) in an operative condition of said system (1).

9. Conversion system (1) according to claims 7 and 8, wherein, in said step of immersing the first tank (11) in the fluid (100), the vanes (12a) of the first turbine (11) and the vanes of the stator (16) are oriented so as to fluid-dynamically internet in order to achieve the maximum operating efficiency of the first turbine (11) and the generator (13) and, in said step of surfacing said first tank (11) from the fluid (100), the vanes (12a) of said first turbine (11) are arranged rotated by 180 degrees and the vanes of the stator (16) are oriented in the opposite direction so as to fluid-dynamically internet in order to achieve the maximum operating efficiency of the first turbine (11) and the respective generator (13).

10. Conversion system (1) according to claim 9, wherein, in said step of immersing the second tank (21) in the fluid (100), the vanes (22a) of the second turbine (21) and the vanes of the stator (26) are oriented so as to fluid-dynamically internet in order to achieve the maximum operating efficiency of the second turbine (21) and the generator (23) and, in said step of surfing said second tank (21) from the fluid (100), the vanes (22a) of the second turbine (21) are arranged rotated by 180 degrees and the vanes of the stator (26) are oriented in the opposite direction so as to fluid-dynamically internet in order to achieve the maximum operating efficiency of the second turbine (21) and the respective generator (23).

11. Conversion system (1) according to claim 1, wherein said first tank (11) and said second tank (21) are mechanically separated and independent of each other in said surfacing step and in said immersing step.

## Patentansprüche

1. Energieumwandlungssystem (1), umfassend:
- mindestens ein erstes Erzeugungselement (10), das einen Speicherbehälter (11) zum Speichern eines Fluids (100) und eine erste Axialturbine (12) sowie einen ersten elektrischen Generator (13) umfasst, der mit der ersten Axialturbine (12) in Wirkverbindung steht;
- ein zweites Erzeugungselement (20), das einen zweiten Speicherbehälter (21) zum Speichern des Fluids (100), eine zweite Axialturbine (22) und einen zweiten elektrischen Generator (23) umfasst, der mit der zweiten Axialturbine (22) wirkverbunden ist;
- ein Umwandlungselement (30) zum Umwandeln der von dem ersten elektrischen Generator (13) und dem zweiten elektrischen Generator (23) erzeugten Energie;
wobei der erste Behälter (11) und der zweite Behälter (21) derart eingerichtet sind, dass sie abwechselnd in das Fluid (100) eintauchbar sind, um ein vorbestimmtes Volumen durch entsprechende in einem unteren Abschnitt des ersten und zweiten Behälters (11,21) angeordnete Durchgangsöffnungen (14, 24) vorübergehend zu speichern;
wobei der erste Speicherbehälter (11) und der zweite Speicherbehälter (21) jeweils an der ersten Durchgangsöffnung (14) und der zweiten Durchgangsöffnung (24) die besagte erste Turbine (12) und die besagte zweite Turbine (22) aufweisen, so dass der Durchgang des Fluids (100) die Betätigung der ersten axialen Turbine (12) oder der zweiten Turbine (22) oder beider gleichzeitig bewirkt;
wobei in dem Schritt des Eintauchens des ersten Behälters (11) in das Fluid (100) dieser durch Schwerkraft mit demselben durch eine erste Öffnung (14) strömenden Fluid (100) gefüllt wird, um die erste Turbine (11) und den ersten Generator (13) zu betreiben, und gleichzeitig in einem Schritt des Auftauchens des zweiten Behälters (21) aus dem Fluid (100) das gleiche zuvor gespeicherte Fluid (100) durch Schwerkraft durch eine zweite Öffnung (24) entleert wird, um die zweite Turbine (21) und den zweiten Generator (23) zu betreiben;
wobei das System (1) während des zyklischen Auftauchens/ Eintauchens des ersten Behälters (11) und des zweiten Behälters (21) eine Umwandlung von Potenzialenergie in Nutzenergie bestimmt, deren Wert proportional zu einem Gesamtvolumen des in den ersten Behälter (11) hinein und aus diesem heraus und in den zweiten Behälter (21) hinein und aus diesem heraus fließenden Fluids (100) und zu einer Tiefe (H) ist, die von dem ersten Behälter (11) und dem zweiten Behälter (21) in Bezug auf eine freie Oberfläche (110) des Fluids (100) erreicht wird; wobei das System (1) umfasst
eine Bewegungseinheit (40) zum Bewegen eines weiteren Fluids (200), das einen Aggregatzustand aufweist, der sich von dem des Fluids (100) unterscheidet, wobei die Bewegungseinheit (40) derart eingerichtet ist, dass sie das weitere Fluid (200) in den ersten Speicherbehälter (11) hinein und aus diesem heraus und in den zweiten Speicherbehälter (21) hinein und aus diesem heraus versetzt, wenn das Fluid (100) in den ersten Behälter (11) und den zweiten Behälter (21) hinein und aus diesen heraus geleitet wird;
und das besagte Energieumwandlungssystem (1) weiterhin eine Aktivierungseinheit (50) umfasst, die so eingerichtet ist, dass sie zumindest die besagte Bewegungseinheit (40) mit elektrischer Energie versorgt, die geeignet ist, zumindest einen anfänglichen Schritt des Pumpens und Ansaugens des besagten weiteren Fluids (200) in Richtung zu und aus dem besagten ersten Behälter (11) und in Richtung zu und aus dem besagten zweiten Behälter (21) in einer betrieblichen Anlaufkonfiguration des besagten Systems (1) zu ermöglichen; wobei die Aktivierungseinheit (50) ferner elektrische Energie an die Bewegungseinheit (40) liefert, die geeignet ist, mindestens einen Schritt des Pumpens und Saugens des weiteren Fluids (200) zu und aus dem ersten Behälter (11) und zu und aus dem zweiten Behälter (21) in einer Betriebskonfiguration zu ermöglichen, wobei die elektrische Energie von einer externen Quelle in Bezug auf das System (1) bezogen wird.

2. Umwandlungssystem (1) nach Anspruch 1, wobei die Bewegungseinheit (40) derart eingerichtet ist, dass sie das weitere Fluid (200) pumpt, wodurch ein vorbestimmter Druck innerhalb des ersten und zweiten Behälters (11, 21) in einem Auftauchschritt derselben erzeugt wird, und dass sie das weitere Fluid (200) ansaugt, wodurch ein vorbestimmter Unterdruck innerhalb des ersten und zweiten Behälters (11, 21) in einem Eintauchschritt erzeugt wird.

3. Umwandlungssystem (1) nach Anspruch 2, wobei das Fluid (100) ein nicht komprimierbares Fluid ist und das weitere Fluid (200) ein komprimierbares Fluid ist, wobei das weitere Fluid (200) nicht mit dem Fluid (100) mischbar ist.

4. Umwandlungssystem (1) nach einem oder mehreren der vorhergehenden Ansprüche 2-3, wobei der erste Behälter und der zweite Behälter so eingerichtet sind, dass sie das Fluid (100) und das weitere Fluid (200) gleichzeitig in einem Wirkzustand des Umwandlungssystems (1) enthalten.

5. Umwandlungssystem (1) nach einem oder mehreren der vorhergehenden Ansprüche 2-4, wobei der erste Behälter (11) und der zweite Behälter (21) mittels Leitungen (60) mit der Bewegungseinheit (40) strömungstechnisch verbunden sind.

6. Umwandlungssystem (1) nach einem oder mehreren der vorhergehenden Ansprüche, wobei die erste Turbine (12) in einem Volumen (VI) enthalten ist, das durch den ersten Behälter (11) definiert und vertikal an der ersten Öffnung (14) angeordnet ist, und die zweite Turbine (22) in einem Volumen (V2) enthalten ist, das durch den zweiten Behälter (21) definiert und vertikal an der zweiten Öffnung (24) angeordnet ist.

7. Umwandlungssystem (1) nach einem oder mehreren der vorhergehenden Ansprüche, wobei die erste Turbine (12) eine Vielzahl von auf einem jeweiligen Laufrad (12b) angeordneten Schaufeln (12a) aufweist, die derart gestaltet sind, dass sie um mindestens 180 Grad um ihre Achse (X) drehbar sind, und die zweite Turbine (22) eine Vielzahl von auf einem jeweiligen Laufrad (22b) angeordneten Schaufeln (22a) aufweist, die derart gestaltet sind, dass sie um mindestens 180 Grad um ihre Achse (Y) drehbar sind.

8. Umwandlungssystem (1) nach einem oder mehreren der vorhergehenden Ansprüche, wobei der erste Behälter (11) einen ersten verstellbaren Leitschaufelstator (16) umfasst, der an der ersten Mündung (14) angeordnet und derart ausgestaltet ist, dass er mit der ersten Turbine (11) zusammenwirkt, und der zweite Behälter (21) einen zweiten verstellbaren Leitschaufelstator (26) umfasst, der an der zweiten Mündung (24) angeordnet und derart ausgestaltet ist, dass er mit der zweiten Turbine (21) in einem Wirkzustand des Systems (1) zusammenwirkt.

9. Umwandlungssystem (1) nach Anspruch 7 und 8, wobei in dem Schritt des Eintauchens des ersten Behälters (11) in das Fluid (100) die Schaufeln (12a) der ersten Turbine (11) und die Schaufeln des Stators (16) so ausgerichtet sind, dass sie strömungstechnisch zusammenwirken, um die maximale Betriebseffizienz der ersten Turbine (11) und des Generators (13) zu erreichen, und, in dem Schritt des Auftauchens des ersten Behälters (11) aus dem Fluid (100) die Schaufeln (12a) der ersten Turbine (11) um 180 Grad gedreht angeordnet sind und die Schaufeln des Stators (16) in die entgegengesetzte Richtung ausgerichtet sind, so dass sie strömungstechnisch zusammenwirken, um die maximale Betriebseffizienz der ersten Turbine (11) und des jeweiligen Generators (13) zu erreichen.

10. Umwandlungssystem (1) nach Anspruch 9, wobei in dem Schritt des Eintauchens des zweiten Behälters (21) in das Fluid (100) die Schaufeln (22a) der zweiten Turbine (21) und die Schaufeln des Stators (26) so ausgerichtet sind, dass sie strömungstechnisch zusammenwirken, um die maximale Betriebseffizienz der zweiten Turbine (21) und des Generators (23) zu erreichen, und, in dem Schritt des Auftauchens des zweiten Behälters (21) aus dem Fluid (100) die Schaufeln (22a) der zweiten Turbine (21) um 180 Grad gedreht angeordnet sind und die Schaufeln des Stators (26) in die entgegengesetzte Richtung ausgerichtet sind, so dass sie strömungstechnisch zusammenwirken, um die maximale Betriebseffizienz der zweiten Turbine (21) und des jeweiligen Generators (23) zu erreichen.

11. Umwandlungssystem (1) nach Anspruch 1, wobei der erste Behälter (11) und der zweite Behälter (21) in dem Auftauchschritt und in dem Eintauchschritt mechanisch getrennt und unabhängig voneinander sind.

## Revendications

1. Système de conversion d'énergie (1) comprenant:
- au moins un premier élément générateur (10) comprenant un réservoir d'accumulation (11) pour accumuler un fluide (100) et une première turbine axiale (12) et un premier générateur électrique (13) connecté de manière fonctionnelle à ladite première turbine axiale (12);
- un second élément générateur (20) comprenant un second réservoir d'accumulation (21) pour accumuler ledit fluide (100), une seconde turbine axiale (22) et un second générateur électrique (23) associé de manière fonctionnelle à ladite seconde turbine axiale (22);
- un élément de transformation (30) pour transformer l'énergie générée par ledit premier générateur électrique (13) et ledit second générateur électrique (23);
dans lequel ledit premier réservoir (11) et ledit second réservoir (21) sont configurés pour être alternativement immergés dans ledit fluide (100) pour stocker temporairement un volume prédéterminé au moyen d'embouchures de passage (14, 24) respectifs disposées dans une portion inférieure desdits premier et second réservoir (11,21);
dans lequel ledit premier réservoir d'accumulation (11) et ledit second réservoir d'accumulation (21) présentent, respectivement en correspondance de ladite première embouchure de passage (14) et de ladite seconde embouchure de passage (24), ladite première turbine (12) et ladite seconde turbine (22) de sorte que le passage dudit fluide (100) provoque le fonctionnement de ladite première turbine axiale (12) ou de ladite seconde turbine (22) ou des deux simultanément;
dans lequel, dans l'étape d'immersion dudit premier réservoir (11) dans le fluide (100), il est rempli par gravité avec le même fluide (100) passant à travers une première embouchure (14) de sorte à faire fonctionner ladite première turbine (11) et ledit premier générateur (13) simultanément, dans une étape de remontée en surface dudit second réservoir (21) dudit fluide (100), le même fluide (100) précédemment stocké est vidé par gravité en passant à travers une seconde embouchure (24) de sore à faire fonctionner ladite seconde turbine (21) et ledit second générateur (23);
dans lequel, pendant la remontée en surface/immersion cyclique duit premier réservoir (11) et dudit second réservoir (21), le système (1) détermine une conversion d'énergie potentielle en énergie utile dont la valeur est proportionnelle à un volume total dudit fluide (100) s'écoulant dans et hors dudit premier réservoir (11) et à dans et hors dudit second réservoir (21) et à une profondeur (H) atteinte par ledit premier réservoir (11) et par ledit second réservoir (21) par rapport à la surface libre (110) dudit fluide (100); dans lequel le système (1) comprend
une unité de mouvement (40) pour déplacer un autre fluide (200) ayant un état d'agrégation différent de celui dudit fluide (100), dans lequel ladite unité de mouvement (40) est configurée pour déplacer ledit autre fluide (200) dans et hors dudit premier réservoir d'accumulation (11) et dans et hors dudit second réservoir d'accumulation (21) lorsque ledit fluide (100) est dirigé dans et hors dudit premier réservoir (11) et dudit second réservoir (21);
et ledit système de conversion d'énergie (1) comprenant en outre une unité d'activation (50) configurée pour fournir de l'énergie électrique à ladite unité de mouvement (40) adaptée pour permettre au moins une étape initiale de pompage et d'aspiration dudit autre fluide (200) vers et depuis ledit premier réservoir (11) et vers et depuis ledit second réservoir (21) dans une configuration de démarrage fonctionnelle dudit système (1); ladite unité d'activation (50) fournissant en outre de l'énergie électrique à ladite unité de mouvement (40) adaptée pour permettre au moins une étape de pompage et d'aspiration dudit autre fluide (200) vers et depuis ledit premier réservoir (11) et vers et depuis ledit second réservoir (21) dans une configuration fonctionnelle, dans lequel ladite énergie électrique est prélevée d'une source externe par rapport audit système (1).

2. Système de conversion (1) selon la revendication 1, dans lequel ladite unité de mouvement (40) est configurée pour pomper ledit autre fluide (200), générant ainsi une pression prédéterminée à l'intérieur dudit premier et dudit second réservoir (11, 21) dans une étape de remontée en surface des mêmes, et pour aspirer ledit autre fluide (200), générant ainsi une dépression à l'intérieur dudit premier et dudit second réservoir (11, 21) dans une étape d'immersion.

3. Système de conversion (1) selon la revendication 2, dans lequel le fluide (100) est un fluide non compressible et ledit autre fluide (200) est un fluide compressible, ledit autre fluide (200) ne pouvant pas être mélangé avec ledit fluide (100).

4. Système de conversion (1) selon l'une ou plusieurs des revendications précédentes 2-3, dans lequel ledit premier réservoir et ledit second réservoir sont configurés pour contenir ledit fluide (100) et ledit autre fluide (200) simultanément dans une condition fonctionnelle dudit système de conversion (1).

5. Système de conversion (1) selon l'une ou plusieurs des revendications 2-4, dans lequel ledit premier réservoir (11) et ledit second réservoir (21) sont connectés de manière fluidique à ladite unité de mouvement (40) au moyen de conduits (60).

6. Système de conversion (1) selon l'une ou plusieurs des revendications précédentes, dans lequel ladite première turbine (12) est contenue dans un volume (VI) défini par ledit premier réservoir (11) et est disposée verticalement en correspondance de ladite première embouchure (14) et ladite seconde turbine (22) est contenue dans un volume (V2) défini par ledit second réservoir (21) et est disposée verticalement en correspondance de ladite seconde embouchure (24).

7. Système de conversion (1) selon l'une ou plusieurs des revendications précédentes, dans lequel ladite première turbine (12) présente une pluralité de aubes (12a) disposées sur un rouet (12b) respectif et lesquelles sont configurées pour pouvoir tourner d'au moins 180 degrés autour de leur axe (X) et ladite seconde turbine (22) présente une pluralité de aubes (22a) disposées sur un rouet (22b) respectif, lesquelles sont configurées pour pouvoir tourner d'au moins 180 degrés autour de leur axe (Y).

8. Système de conversion (1) selon l'une ou plusieurs des revendications précédentes, dans lequel ledit premier réservoir (11) comprend une première stator à ailettes réglables (16) disposée en correspondance de la première embouchure (14) et configurée pour interagir avec ladite première turbine (11) et ledit second réservoir (21) comprend une seconde stator à ailettes réglables (26) disposée en correspondance de la seconde embouchure (24) et configuré pour interagir avec ladite seconde turbine (21) dans une condition fonctionnelle dudit système (1).

9. Système de conversion (1) selon les revendications 7 et 8, dans lequel, dans ladite étape d'immersion du premier réservoir (11) dans le fluide (100), les aubes (12a) de la première turbine (11) et les ailettes du stator (16) sont orientées de sorte à interagir de manière fluidodynamique afin d'obtenir l'efficacité de fonctionnement maximale de la première turbine (11) et du générateur (13) et, dans ladite étape de remontée en surface dudit premier réservoir (11) du fluide (100), les aubes (12a) de ladite première turbine (11) sont disposées tournées de 180 degrés et les ailettes du stator (16) sont orientées dans la direction opposée de sorte à interagir de manière fluidodynamique afin d'obtenir l'efficacité de fonctionnement maxime de la première turbine (11) et du générateur (13) respectif.

10. Système de conversion (1) selon la revendication 9, dans lequel, dans ladite étape d'immersion du second réservoir (21) dans le fluide (100), les aubes (22a) de la seconde turbine (21) et les ailettes du stator (26) sont orientées de sorte à interagir de manière fluidodynamique afin d'obtenir l'efficacité de fonctionnement maximale de la seconde turbine (21) et du générateur (23) et, dans ladite étape de remontée en surface dudit second réservoir (21) du fluide (100), les aubes (22a) de la seconde turbine (21) sont disposées tournées de 180 degrés et les ailettes du stator (26) sont orientées dans la direction opposée de sort à interagir de manière fluidodynamique afin d'obtenir l'efficacité de fonctionnement maximale de la seconde turbine (21) et du générateur (23) respectif.

11. Système de conversion (1) selon la revendication 1, dans lequel ledit premier réservoir (11) et ledit second réservoir (21) sont mécaniquement séparés et indépendants entre eux dans ladite étape de remontée en surface et dans ladite étape d'immersion.
